# EUROPEAN PATENT APPLICATION

(11) **EP 4 748 623 A1**
(43) Date of publication of application: **27.05.2026**
(21) Application number: 25212848.3
(22) Date of filing: 31.10.2025
(51) Int. Cl.: B60L 15/20

(54) **BATTERY ELECTRIC VEHICLE**

(30) Priority: 20.11.2024 JP 2024202282
(71) Applicant: TOYOTA JIDOSHA KABUSHIKI KAISHA, Toyota-shi, Aichi-ken 471-8571 (JP)
(72) Inventor: IMAMURA, Tatsuya, TOYOTA-SHI, AICHI-KEN, 471-8571 (JP); ISAMI, Yoichiro, TOYOTA-SHI, AICHI-KEN, 471-8571 (JP); MOTEKI, Taro, TOYOTA-SHI, AICHI-KEN, 471-8571 (JP); OKAMURA, Yukari, TOYOTA-SHI, AICHI-KEN, 471-8571 (JP)
(74) Representative: Cabinet Beau de Loménie

(57) **Abstract**

A battery electric vehicle (100) controlled in control modes including a manual mode in which an electric motor (4) is controlled so as to simulate an action of a virtual vehicle equipped with a virtual engine includes: a transmission (9) configured to change a gear ratio between the electric motor (4) and a drive wheel (6F, 6R); a clutch (8) provided between the electric motor (4) and the transmission (9); a clutch operation device (24); and a control device (101) including a processor (102). The processor (102) is configured to communicate with the clutch (8) and the clutch operation device (24). The processor (102) is configured to, in the manual mode, control the clutch (8) according to a command from the clutch operation device (24). The processor (102) is configured to, even in the manual mode, at the time of starting of the battery electric vehicle (100), start the battery electric vehicle (100) by controlling the clutch (8) without depending on the command from the clutch operation device (24).

## Description

### BACKGROUND OF THE INVENTION

### 1. Field of the Invention

The present disclosure relates to a battery electric vehicle that has an electric motor as a drive source.

### 2. Description of Related Art

Japanese Patent No. 6787507 (JP 6787507 B) discloses a technology relating to a battery electric vehicle that can, through control of an electric motor, simulatively reproduce a manual speed change action of a vehicle that has an engine as a motive power source and includes a transmission for a driver to manually perform speed change operation (MT vehicle). In this battery electric vehicle, the driver can switch, by a switch or the like, between an MT mode (MT travel mode) in which the vehicle performs travel involving a pseudo-manual speed change action and an EV mode (EV travel mode) in which the vehicle performs common EV travel.

### SUMMARY OF THE INVENTION

This technology allows the driver to select the MT mode in the battery electric vehicle to experience travel like a manual transmission vehicle (hereinafter written as "MT vehicle") involving a pseudo-manual speed change action and pseudo-clutch operation. However, if the behavior of the MT vehicle is completely reproduced in every situation, the number of operations that the driver should perform increases. In particular, in the situation of starting the vehicle, a complicated action, such as so-called half-clutch, is required, so that if the behavior of the MT vehicle is completely reproduced, the driver may find the operation troublesome.

The present disclosure provides a battery electric vehicle that allows a driver to experience operation of an MT vehicle while at the same time keeping the ease of starting the vehicle.

A battery electric vehicle according to one aspect of the present disclosure controls in control modes including a manual mode in which an electric motor is controlled so as to simulate an action of a virtual vehicle equipped with a virtual engine, and includes: a transmission configured to change a gear ratio between the electric motor and a drive wheel; a clutch provided between the electric motor and the transmission; a clutch operation device; and a control device including a processor. The processor is configured to communicate with the clutch and the clutch operation device. The processor is configured to, in the manual mode, control the clutch according to a command from the clutch operation device. The processor is configured to, even in the manual mode, at the time of starting of the battery electric vehicle, start the battery electric vehicle by controlling the clutch without depending on the command from the clutch operation device.

In the battery electric vehicle according to the one aspect of the present disclosure, the processor may be configured to, when a start condition of the battery electric vehicle is met, start the battery electric vehicle by controlling the clutch without depending on the command from the clutch operation device.

In the battery electric vehicle according to the one aspect of the present disclosure, the processor may be configured to, when the start condition is met, from a state where the electric motor is stopped and the clutch is engaged, rotate the electric motor with the clutch in the engaged state.

In the battery electric vehicle according to the one aspect of the present disclosure, the processor may be configured to, when the start condition is met, rotate the electric motor at a predetermined rotation speed with the clutch in a disconnected state, and engage the clutch while controlling torque of the electric motor.

In the battery electric vehicle according to the one aspect of the present disclosure, the control device may include a storage device that can be provided with and stores a torque map for simulating a torque property of the virtual engine by torque of the electric motor. The torque map may be such that: in a region where a virtual engine rotation speed of the virtual engine is equal to or higher than a predetermined speed, the torque property of the virtual engine is reproduced; and in a region where the virtual engine rotation speed is equal to or lower than the predetermined speed, the torque property is different from the torque property of the virtual engine.

In the battery electric vehicle according to the one aspect of the present disclosure, the torque map may be a map representing a relationship between the virtual engine rotation speed and the torque of the electric motor, and in the region where the virtual engine rotation speed is equal to or lower than the predetermined speed, the torque of the electric motor may be set so as to approach zero as the virtual engine rotation speed decreases.

In the battery electric vehicle according to the one aspect of the present disclosure, the torque map may be a map representing a relationship between the virtual engine rotation speed and the torque of the electric motor, and in the region where the virtual engine rotation speed is equal to or lower than the predetermined speed, the torque of the electric motor may be set to be constant.

In the battery electric vehicle according to the one aspect of the present disclosure, the torque map may be a map representing a relationship between the virtual engine rotation speed and the torque of the electric motor, and the torque of the electric motor in the region where the virtual engine rotation speed is equal to or lower than the predetermined speed may be variable according to travel resistance of the battery electric vehicle.

The battery electric vehicle according to the one aspect of the present disclosure may include a brake operation device. The start condition may be that an amount that the brake operation device is operated by a driver of the battery electric vehicle becomes equal to or smaller than a first threshold value.

The battery electric vehicle according to the one aspect of the present disclosure may include an accelerator operation device. The start condition may be that an amount that the accelerator operation device is operated by a driver of the battery electric vehicle becomes equal to or larger than a second threshold value.

In the battery electric vehicle according to the one aspect of the present disclosure, the processor may be configured to disable an input to the clutch operation device at the time of starting of the battery electric vehicle.

The battery electric vehicle according to the one aspect of the present disclosure includes the manual mode in which the electric motor is controlled so as to simulate actions of the virtual vehicle equipped with the virtual engine. In the manual mode in which the actions of the virtual vehicle equipped with the virtual engine are simulated, the command from the clutch operation device is reflected on the control of the clutch, allowing the driver to enjoy the clutch operation as if driving an MT vehicle. In the battery electric vehicle according to the one aspect of the present disclosure, at the time of starting, the battery electric vehicle is started even without the command from the clutch operation device. Thus, it is possible to provide the driver with the fun of driving and at the same time maintain the ease of starting the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view showing a configuration of a battery electric vehicle according to an embodiment of the present disclosure;
FIG. 2 is a view showing a configuration of a control device relating to travel control of the battery electric vehicle;
FIG. 3 is a time chart for describing control at the time of starting of the vehicle in a first embodiment;
FIG. 4 is a graph showing an example of a torque map specifying a relationship between a virtual engine rotation speed and virtual engine torque;
FIG. 5 is a graph showing another example of the torque map specifying the relationship between the virtual engine rotation speed and the virtual engine torque;
FIG. 6 is a time chart for describing control at the time of starting of the vehicle in a second embodiment;
FIG. 7 is a time chart for describing another example of the control at the time of starting of the vehicle in the second embodiment;
FIG. 8 is a view showing a configuration of a travel control device in a modified example;
FIG. 9A is a view showing an example of a correspondence relationship between gear stages and virtual shift positions in a modified example;
FIG. 9B is a view showing an example of a correspondence relationship between gear stages and virtual shift positions in a modified example; and
FIG. 9C is a view showing an example of a correspondence relationship between gear stages and virtual shift positions in a modified example.

### DETAILED DESCRIPTION OF EMBODIMENTS

Embodiments of the present disclosure will be described with reference to the accompanying drawings.

### 1. Configuration of Battery Electric Vehicle

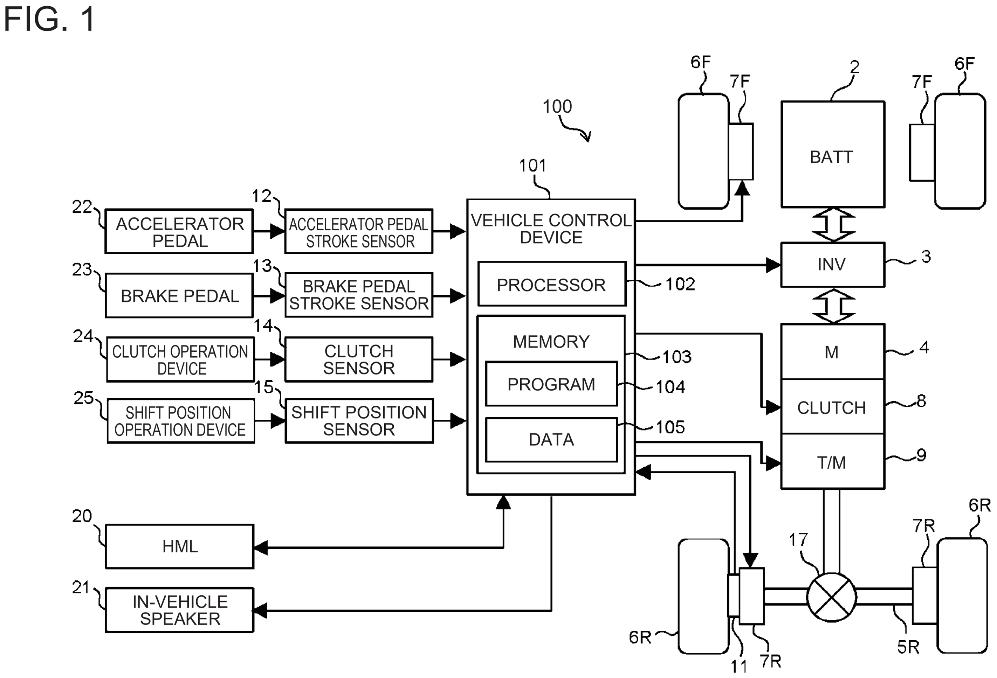

FIG. 1 is a view schematically showing a configuration of a battery electric vehicle 100 according to an embodiment of the present disclosure.

The battery electric vehicle 100 is a battery electric vehicle (BEV) that includes an electric motor (M) 4 as a motive power source for traveling and travels on electric energy stored in a battery (BATT) 2. The electric motor 4 is, for example, a three-phase alternating-current motor. An inverter (INV) 3 is mounted on the electric motor 4. The inverter 3 is connected to the battery (BATT) 2. The inverter 3 is, for example, a voltage-type inverter and controls the torque of the electric motor 4 through PWM control.

The battery electric vehicle 100 includes a transmission (T/M) 9 and a clutch 8 that is provided between the electric motor 4 and the transmission 9. The transmission 9 is a stepped transmission having a plurality of switchable gear stages, and changes a gear ratio between the electric motor 4 and drive wheels. The clutch 8 can switch between a state where motive power is transmitted from the electric motor 4 to the transmission 9 and a state where the motive power is cut off. A master cylinder and a release cylinder (neither of which is shown) are included in the clutch 8, and the state of transmission of the motive power changes according to strokes of these cylinders. The transmission 9 is connected to a differential gear 17 by a propeller shaft. The differential gear 17 is connected to right and left rear wheels 6R by right and left driveshafts 5R. The rear wheels 6R and front wheels 6F are suspended by electronically controlled rear suspensions 7R and front suspensions 7F, respectively.

The drive wheels of the battery electric vehicle 100 may be the front wheels. Alternatively, the battery electric vehicle 100 may be configured as an all-wheel-drive vehicle. In that case, a center differential gear may be provided on the propeller shaft, and drive torque split by the center differential gear may be transmitted to each of the front wheels and the rear wheels.

Subsequently, a configuration of a control system of the battery electric vehicle 100 will be described with reference to FIG. 1.

The battery electric vehicle 100 includes a vehicle speed sensor 11. At least one of vehicle wheel speed sensors (not shown) that are respectively provided at the right and left front wheels 6F and the right and left rear wheels 6R is used as the vehicle speed sensor 11.

The battery electric vehicle 100 further includes an accelerator pedal stroke sensor 12. The accelerator pedal stroke sensor 12 is provided at an accelerator pedal 22, and outputs a signal indicating a stepping amount of the accelerator pedal 22, i.e., an accelerator operation amount. While the accelerator pedal 22 is a foot-operated pedal-type device, the device for accelerator operation may instead be a hand-operated device. For example, the battery electric vehicle 100 may include, instead of the accelerator pedal 22, a hand-operated lever-type accelerator operation device or a dial-type accelerator operation device. These accelerator operation devices are also provided with a sensor and output a signal indicating an operation amount, i.e., the accelerator operation amount. A driver's operation of the accelerator operation device is a continuous operation, and the signal indicating the accelerator operation amount is continuously sent to a vehicle control device 101 during travel of the battery electric vehicle 100.

The battery electric vehicle 100 further includes a brake pedal stroke sensor 13. The brake pedal stroke sensor 13 is provided at a brake pedal 23, and outputs a signal indicating a stepping amount of the brake pedal 23, i.e., a brake operation amount. While the brake pedal 23 is a foot-operated pedal-type operation device, the device for brake operation may be a hand-operated device.

The accelerator pedal 22 and the brake pedal 23 are driving operation members for driving the battery electric vehicle 100 as an ordinary BEV. In addition to these driving operation members, the battery electric vehicle 100 includes speed change operation members for performing speed change operation (shifting operation) as in an MT vehicle. The speed change operation members include a clutch operation device 24 and a shift position operation device 25 to be described below.

The clutch operation device 24 is a device for operating the clutch 8. However, the clutch operation device 24 and the clutch 8 are not coupled to each other through mechanical connection. The clutch operation device 24 is provided with a clutch sensor 14, and outputs a signal indicating an operation amount of the clutch operation device 24, i.e., a clutch operation amount. The clutch operation amount is 0% at a starting end position of the clutch operation device 24 and reaches 100% at a terminal end position of the clutch operation device 24. The signal from the clutch sensor 14 is sent to the vehicle control device 101 to be described later, and the vehicle control device 101 controls the stroke of the master cylinder or the release cylinder based on the clutch operation amount so as to control the clutch 8 into an engaged state or a disconnected state.

Like a conventional MT vehicle, the battery electric vehicle 100 may include a clutch pedal as the clutch operation device 24. When the clutch operation device 24 is a clutch pedal, a stepping amount of the clutch pedal is the clutch operation amount. The clutch pedal is provided with a reaction force mechanism for reproducing an operation feeling like the clutch pedal of the conventional MT vehicle, and generates a reaction force in response to the driver's stepping thereon. Alternatively, the clutch operation device 24 may be a hand-operated device. For example, the battery electric vehicle 100 may include a hand-operated lever-type clutch operation device 24 or a dial-type clutch operation device 24. The driver's operation of the clutch operation device 24 is a continuous operation, and the signal indicating the clutch operation amount is continuously sent to the vehicle control device 101 while the battery electric vehicle 100 is traveling or stopping.

The shift position operation device 25 is a device for switching among the gear stages of the transmission 9. In the shift position operation device 25, shift positions are associated with predetermined physical positions, and these physical positions can be selected by an operation member. Like the conventional MT vehicle, the battery electric vehicle 100 may include, as the shift position operation device 25, an H-type shifter that selects a shift position as a shift stick is moved along an H-shaped gate. The shift position operation device 25 is provided with a shift position sensor 15. The shift position sensor 15 outputs a signal indicating a shift position selected by the shift position operation device 25. Operation that the driver performs on the shift position operation device 25 is discrete operation, and a signal indicating the shift position is discretely output from the shift position operation device 25 (shift position sensor 15) each time the driver performs operation.

The battery electric vehicle 100 further includes a human-machine interface (HMI) 20 as an interface with the driver, and an in-vehicle speaker 21. The HMI 20 includes a touch panel display. The HMI 20 displays information on the touch panel display, and accepts an input that the driver gives through touch operation on the touch panel display. While an MT mode, to be described later, is selected, a meter indicating a virtual engine rotation speed, to be described later, may be displayed on the HMI 20. The in-vehicle speaker 21 provides information to the driver by voice, and can output a pseudo-engine sound to be described later.

The battery electric vehicle 100 includes the vehicle control device 101. Sensors and control target devices that are installed in the battery electric vehicle 100 are connected to the vehicle control device 101 through an on-board network. In addition to the vehicle speed sensor 11, the accelerator pedal stroke sensor 12, the brake pedal stroke sensor 13, the clutch sensor 14, and the shift position sensor 15, various sensors are installed in the battery electric vehicle 100.

The vehicle control device 101 includes at least a processor (processing circuit) 102 and a memory 103. The memory 103 includes a RAM in which data is temporarily recorded, and a ROM in which programs 104 that are executable by the processor 102 and a variety of data 105 related to programs are saved. The program 104 is composed of a plurality of instructions. The processor 102 retrieves the program 104 and the data 105 from the memory 103 and executes the program 104, and generates a control signal based on signals acquired from sensors. The numbers of the processors 102 and the memories 103 included in the vehicle control device 101 may be one or may be more than one.

The vehicle control device 101 can control the battery electric vehicle 100 in various control modes. The driver can select the control mode by himself or herself by performing touch operation on the touch panel display of the HMI 20. Specifically, when touch operation is performed on the touch panel display of the HMI 20, one or more programs 104 linked to each touch operation are retrieved from the memory 103 and executed by the processor 102. In the following, the control modes of the battery electric vehicle 100 by the vehicle control device 101 that can be selected by the driver through operation of the HMI 20 will be described.

### 2. Control Modes of Battery Electric Vehicle

The control modes of the battery electric vehicle 100 that can be selected in the vehicle control device 101 include at least an EV mode and the MT mode. The driver can select the control mode from a selection screen displayed on the touch panel display of the HMI 20.

When the EV mode is selected, the control mode of the battery electric vehicle 100 switches to the EV mode. The EV mode is a mode in which the battery electric vehicle 100 is driven and made to travel as an ordinary BEV. In the EV mode, speed change operation of the shift position operation device 25 and clutch operation of the clutch operation device 24 are disabled. In the EV mode, the clutch 8 remains in the engaged state. The transmission 9 may be in a state where an arbitrary gear stage has been selected. In the EV mode, the driver can drive the battery electric vehicle 100 basically by operating only the accelerator pedal 22, the brake pedal 23, and a steering wheel (not shown). However, the EV mode may include a mode in which operation of the clutch operation device 24 is enabled.

When the MT mode is selected, the control mode of the battery electric vehicle 100 switches to the MT mode. The MT mode is a control mode for making the battery electric vehicle 100 act like the MT vehicle. In the MT mode, output properties of the electric motor 4 are controlled so as to simulate engine properties of the MT vehicle. In the MT mode, operation of the clutch operation device 24 and the shift position operation device 25 is enabled, so that the driver can perform speed change operation by the shift position operation device 25. An action of switching the gear ratio in the MT vehicle is reproduced by the clutch 8 and the transmission 9. The MT mode involving the driver's speed change operation may be called a manual mode. In contradistinction to the manual mode, the EV mode may be called an automatic mode.

In the MT mode, the driver may be able to select a more detailed control mode. In each control mode included in the MT mode, the properties of the MT vehicle being simulated differ. For example, the driver may be able to customize the MT vehicle being simulated by having options about the engine properties, engine sound, drive mode, suspension properties, number of shift positions, etc., displayed on the HMI 20 and combining contents to be selected as appropriate. In this case, an idling rotation speed and an idling control lower-limit rotation speed, to be described later, may be determined according to the engine properties selected by the driver. By thus operating the touch panel display of the HMI 20, the driver can switch the control mode of the battery electric vehicle 100 according to his or her preferences.

The control mode switched by the driver relates to travel control of the battery electric vehicle 100. In the next section, the travel control of the battery electric vehicle 100 by the vehicle control device 101 will be described.

### 3. Travel Control of Battery Electric Vehicle

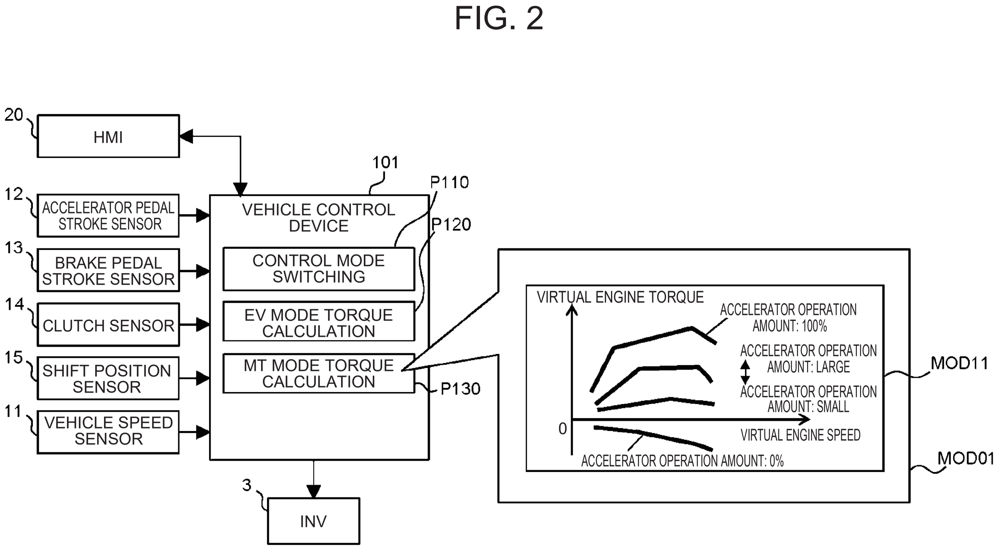

FIG. 2 is a view showing a configuration of the vehicle control device 101 relating to the travel control of the battery electric vehicle 100. In the travel control, at least the torque of the electric motor 4 is controlled to make the battery electric vehicle 100 travel. As one or more programs 104 for motor control that are stored in the memory 103 are executed by the processor 102, the processor 102 functions as a travel control device.

A control mode signal is input from the HMI 20 to the vehicle control device 101 as the travel control device. The control mode signal includes information about the control mode selected by the driver. The vehicle control device 101 executes a process P110 based on the control mode signal. In the process P110, the control mode is switched in accordance with the control mode signal. Of patterns of switching among the control modes, one that particularly affects the travel control is switching between the EV mode and the MT mode.

When the control mode is switched to the EV mode, the vehicle control device 101 executes a process P120 for a torque calculation in the EV mode. In the process P120, the vehicle control device 101 acquires a vehicle speed from the signal of the vehicle speed sensor 11 and acquires the accelerator operation amount from the signal of the accelerator pedal stroke sensor 12. The vehicle control device 101 has a motor torque map in which the accelerator operation amount and the vehicle speed are parameters. The vehicle control device 101 inputs the vehicle speed and the accelerator operation amount into the motor torque map, and controls the inverter 3 so as to make the electric motor 4 generate torque obtained by the motor torque map.

When the control mode is switched to the MT mode, the vehicle control device 101 executes a process P130 for a torque calculation in the MT mode. In the process P130, the torque of the electric motor 4 is calculated so as to reproduce the engine properties of the MT vehicle.

For the calculation of drive wheel torque, a vehicle model MOD01 is used. The vehicle model MOD01 includes an engine model MOD11. An engine that is virtually realized by the vehicle model MOD01 will be referred to as a virtual engine. In the engine model MOD11, the virtual engine is modeled.

The engine model MOD11 calculates a virtual engine rotation speed and virtual engine torque. The virtual engine rotation speed is calculated from the vehicle speed, a total speed reduction ratio, and a torque capacity of the clutch 8. The virtual engine torque is calculated from the virtual engine rotation speed and the accelerator operation amount. The vehicle speed is acquired from the signal of the vehicle speed sensor 11. The accelerator operation amount is acquired from the signal of the accelerator pedal stroke sensor 12. The total speed reduction ratio is a numerical value obtained by multiplying the gear ratio of the transmission 9 by a speed reduction ratio that is determined by a mechanical structure from the transmission 9 to the drive wheels. In the engine model MOD11, the relationship between the virtual engine rotation speed and the virtual engine torque for each accelerator operation amount is specified by the torque map. The engine properties of the engine model MOD11 may be selectable by the driver through operation of the HMI 20.

The vehicle control device 101 controls the inverter 3 such that the virtual engine torque calculated by the engine model MOD11 is output from the electric motor 4. When the battery electric vehicle 100 is an all-wheel-drive vehicle, a torque distribution for the front wheels 6F and the rear wheels 6R is further calculated, and the drive wheel torque is split by the center differential gear based on the calculated torque distribution. The torque distribution for the front wheels 6F and the rear wheels 6R can be fixed as well as can be actively or passively varied. For example, the torque distribution may be determined according to the control mode that the driver has selected by the HMI 20. In this way, a travel feeling like that of the MT vehicle is reproduced in the battery electric vehicle 100.

According to the above-described torque map, when the accelerator operation amount is zero, the virtual engine torque becomes negative and the virtual engine rotation speed decreases. However, for the engine to maintain stable rotation, the engine needs to maintain a constant rotation speed. In an actual engine, therefore, idling control is performed that controls the engine torque such that the engine rotation speed is maintained at an idling rotation speed. Accordingly, the vehicle control device 101 may also perform the idling control on the virtual engine.

### 4. Sound Control of Battery Electric Vehicle

The vehicle control device 101 may further perform sound control that controls sounds emitted by the in-vehicle speaker 21. As one or more programs 104 for the sound control that are stored in the memory 103 are executed by the processor 102, the processor 102 functions as a sound control device. The processor 102 that functions as the travel control device and the processor 102 that functions as the sound control device may be separate processors or may be the same processor.

The vehicle control device 101 as the sound control device can generate artificially generated sounds from the in-vehicle speaker 21. One of these artificial sounds is a pseudo-engine sound imitating an engine sound in the conventional MT vehicle. When a control mode signal indicating that the MT mode has been selected is input from the HMI 20, the vehicle control device 101 as the sound control device generates the pseudo-engine sound based on the virtual engine torque and the virtual engine rotation speed calculated in the process P130.

When the driver can select the engine sound, an engine sound selected by the HMI 20 is used as a sound source of the pseudo-engine sound to be generated from the in-vehicle speaker 21. However, the sound of the sound source is not used as is; the sound pressure of the engine sound is calculated such that the sound pressure becomes higher as the virtual engine torque becomes higher, and the frequency of the engine sound is calculated such that the frequency becomes higher as the virtual engine rotation speed becomes higher. For example, the sound pressure of the sound source is changed by an amplifier, and the frequency of the sound source is changed by a frequency modulator, before the pseudo-engine sound is played from the in-vehicle speaker 21. The virtual engine torque and the virtual engine rotation speed change according to the driver's accelerator operation, speed change operation, and clutch operation. Changing the sound pressure and the frequency of the pseudo-engine sound according to the virtual engine torque and the virtual engine rotation speed thus changing according to the driver's operation can give the driver a sense of reality as if driving a real MT vehicle.

### 5. Start Control

### 5-1. Overview

As described above, by switching the control mode to the MT mode through operation of the HMI 20, the driver of the battery electric vehicle 100 can experience operation of the MT vehicle in the battery electric vehicle 100. This can add to the driver's fun of driving. On the other hand, operation in the MT mode is cumbersome and complicated for the driver, as it requires operation of the speed change operation members in addition to operation of the driving operation members such as acceleration operation and brake operation. Thus, if the behavior of the MT vehicle is faithfully reproduced in every situation, the driver, especially one who is not used to driving the MT vehicle, may find the operation troublesome.

One of situations where operation becomes particularly complicated for the driver is the situation of starting. That is, at the time of starting of the MT vehicle, more complicated clutch operation than during steady travel, such as so-called half-clutch, is required, and the driver may find such operation troublesome. In the battery electric vehicle 100 according to the embodiment, therefore, the vehicle control device 101 starts the battery electric vehicle 100 when a start condition is met, regardless of whether the driver has operated the clutch operation device 24. This can maintain the ease of starting while allowing the driver to enjoy a travel feeling like that of the MT vehicle.

The start condition is a condition indicating that the driver intends to start the battery electric vehicle 100. For example, the start condition may be that the driver takes his or her foot off the brake pedal 23 on which the driver has been stepping. Alternatively, the start condition may be that the driver starts operating the accelerator pedal 22. The vehicle control device 101 determines that the driver has taken his or her foot off the brake pedal 23 when the brake operation amount becomes equal to or smaller than a threshold value based on the signal acquired from the brake pedal stroke sensor 13. The vehicle control device 101 determines that the driver has started operating the accelerator pedal 22 when the accelerator operation amount becomes equal to or larger than a threshold value based on the signal acquired from the accelerator pedal stroke sensor 12.

The battery electric vehicle 100 may include an active cruise control (ACC) having a function of automatically holding the brake even in a state where the driver's foot is off the brake pedal 23 and a function of automatically starting to follow a vehicle ahead when that vehicle starts. Such an ACC may be able to be activated also in the MT mode, and the battery electric vehicle 100 may be started regardless of whether the driver has operated the clutch operation device 24. In this case, the start condition is met when an initiation condition for automatic following by the ACC is met.

### 5-2. Automatic Control of Clutch

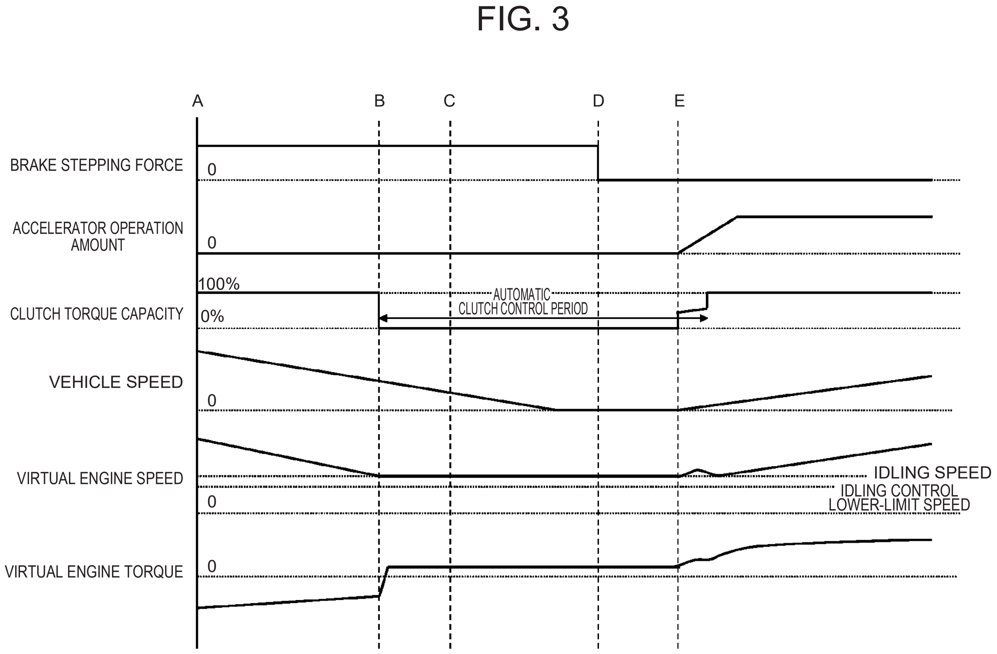

Control of the battery electric vehicle 100 at the time of starting will be described by presenting two embodiments. In a first embodiment, the vehicle control device 101 automatically controls the clutch 8 before and after starting of the battery electric vehicle 100, without depending on a command from the clutch operation device 24. Using FIG. 3, control that the vehicle control device 101 performs in the first embodiment will be described.

FIG. 3 is a time chart showing a situation where the driver has stopped the battery electric vehicle 100 and then starts it again. While the shift position is not shown in the time chart to be described below, it is assumed that first gear has been selected as the shift position from the start to the end of the time chart.

At point A when the time chart starts, the driver is stepping on the brake pedal 23 to stop the battery electric vehicle 100 that is traveling. The vehicle speed decreases gradually, and the virtual engine rotation speed also decreases accordingly. Since the accelerator operation amount is 0%, the virtual engine torque is negative. The negative virtual engine torque is reproduced by regenerative torque of the electric motor 4.

At point B, the virtual engine rotation speed decreases to the idling rotation speed. At this point, the driver is not operating the clutch operation device 24, and the clutch 8 is in the engaged state. Therefore, when the engine rotation speed continues to decrease and decreases to the idling control lower-limit rotation speed, a state of a so-called engine stall arises.

Therefore, the vehicle control device 101 automatically controls the clutch 8 to put the clutch 8 in the disconnected state, without depending on the driver's operation of the clutch operation device 24. The idling control is activated in response to the virtual engine rotation speed having decreased to the idling rotation speed. When the idling control is activated, virtual engine torque required to maintain the idling rotation speed is output to reproduce the idling control in the conventional MT vehicle. However, the virtual engine torque that is increased by the idling control is not reflected on the torque of the electric motor 4. Since the accelerator operation amount is 0%, an upper limit is set on the virtual engine torque to avoid an increase in a drive force that is not intended by the driver.

The idling rotation speed is preset according to the engine properties of the virtual engine. For example, the idling rotation speed may be set to 1000 rpm. When the driver can select the engine properties, the idling rotation speed may be changed according to the engine properties selected by the driver.

Since the clutch 8 is in the disconnected state, the battery electric vehicle 100 stops at point D without causing an engine stall. At point E, the driver performs an action to re-start the battery electric vehicle 100. Here, the driver's action for starting is operating the accelerator pedal 22. In response to the driver's action, the vehicle control device 101 determines that the start condition is met, and performs control for starting the battery electric vehicle 100.

Specifically, the vehicle control device 101 increases the clutch torque capacity of the clutch 8 little by little according to the driver's operation of the accelerator pedal 22 so as not to cause an engine stall, thereby creating a state of so-called half-clutch. The virtual engine torque increases as the accelerator operation amount increases. When the vehicle starts moving, the vehicle control device 101 maximizes the clutch torque capacity.

Thus, in the first embodiment, the automatic control of the clutch 8 is performed before and after starting of the battery electric vehicle 100. In an automatic clutch control period in which the automatic control of the clutch 8 is performed, the driver's operation of the clutch operation device 24 is disabled and the clutch 8 is automatically controlled by the vehicle control device 101. The automatic clutch control period ends, for example, at a point when the speed of the battery electric vehicle 100 has increased and reached a predetermined speed. Alternatively, the automatic clutch control period may end at a point when the virtual engine rotation speed has become higher than the idling rotation speed by a predetermined value or more. When the automatic clutch control period ends, operation of the clutch operation device 24 is enabled again, and the driver's operation of the clutch operation device 24 is reflected on the control of the clutch 8. In this way, the battery electric vehicle 100 can be started without the driver performing operation of the clutch operation device 24.

### 5-3. Second Embodiment

### 5-3-1. Virtual Engine Torque Map

A second embodiment of the control at the time of starting by the vehicle control device 101 will be described. In the second embodiment, when the start condition is met, the vehicle control device 101 starts the battery electric vehicle 100 by controlling the torque of the electric motor 4 with the clutch 8 engaged, without depending on the operation of the clutch operation device 24.

As described in Section 3, when the MT mode is selected, the engine model MOD11 calculates the virtual engine torque based on the torque map specifying the relationship between the virtual engine rotation speed and the virtual engine torque. This torque map is for reproducing the torque properties of the engine of the MT vehicle being simulated by the torque of the electric motor 4. The torque map is preset and stored in the memory 103. To realize the start control, in a region equal to or below the idling control lower-limit rotation speed of the torque map used in the engine model MOD11, torque different from the torque properties of the engine being simulated may be specified.

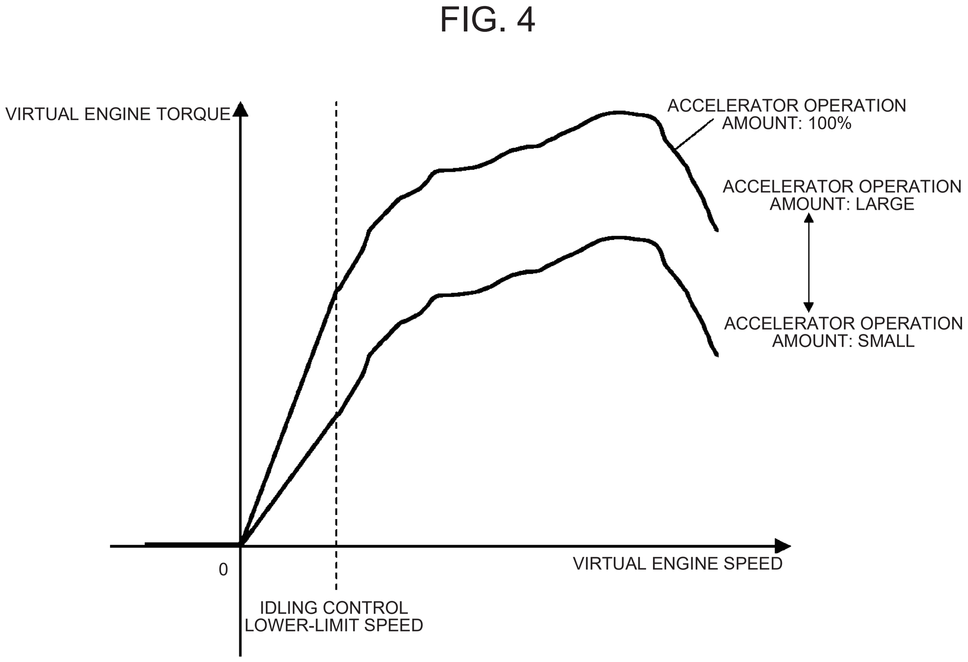

FIG. 4 shows one example of the torque map. In a region where the virtual engine rotation speed is equal to or higher than the idling control lower-limit rotation speed, the relationship between the virtual engine rotation speed and the virtual engine torque is specified for each accelerator operation amount so as to achieve a torque property that reproduces the engine being simulated. On the other hand, in the region where the virtual engine rotation speed is equal to or lower than the idling control lower-limit rotation speed, torque different from the torque property of the actual engine is specified. Specifically, the relationship between the virtual engine rotation speed and the virtual engine torque for each accelerator operation amount is specified such that the virtual engine torque approaches zero as the virtual engine rotation speed decreases.

In the example of FIG. 4, the virtual engine torque is zero when the virtual engine rotation speed is zero, but it need not be necessarily zero. The idling control lower-limit rotation speed is preset according to the engine properties of the virtual engine. For example, the idling control lower-limit rotation speed may be set to 500 rpm. When the driver can select the engine properties, the idling control lower-limit rotation speed may be changed according to the engine properties selected by the driver.

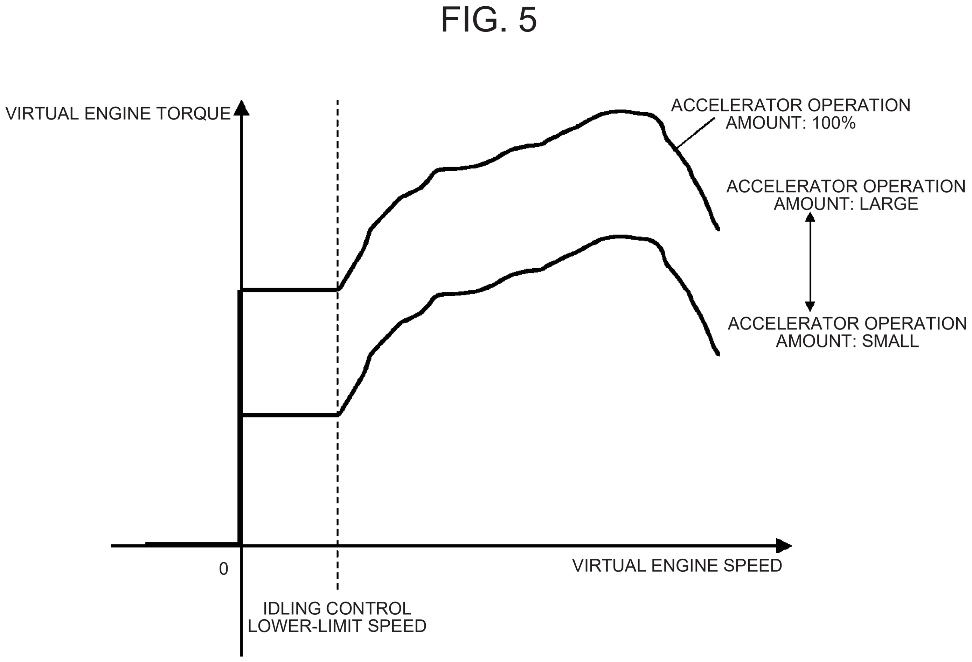

FIG. 5 shows another example of the torque map used in the engine model MOD11. When the accelerator pedal 22 is being stepped on by the driver, the torque map of FIG. 5 may be used. As in the example of FIG. 4, for the region where the virtual engine rotation speed is equal to or higher than the idling control lower-limit rotation speed, the relationship between the virtual engine rotation speed and the virtual engine torque is specified so as to simulate the engine property of the actual engine. On the other hand, in the region where the virtual engine rotation speed is equal to or lower than the idling control lower-limit rotation speed, the virtual engine torque for each accelerator operation amount is specified such that the torque becomes constant.

Alternatively, the virtual engine torque in the region where the virtual engine rotation speed is equal to or lower than the idling control lower-limit rotation speed may be variable according to travel resistance of the battery electric vehicle 100. For example, in situations where the travel resistance is expected to be high, such as when a load carried by the battery electric vehicle 100 is large or the gradient of a place where the battery electric vehicle 100 is parked is large, the virtual engine torque relative to the virtual engine rotation speed may be specified to be higher. Outputting higher torque when the travel resistance is higher can secure acceleration at the time of starting or inhibit sliding down on a hill.

The region where the virtual engine rotation speed is equal to or lower than the idling control lower-limit rotation speed is a region where the engine torque is not output in the conventional MT vehicle. As the torque map illustrated in FIG. 4 or FIG. 5 is used, also in such a region, the virtual engine torque is calculated by the engine model MOD11 and output as the drive wheel torque.

Specifically, in the second embodiment, the relationship between the virtual engine rotation speed and the virtual engine torque is specified in the engine model MOD11 so as to reproduce the torque property of the engine being simulated in the region where the virtual engine rotation speed is equal to or higher than the idling control lower-limit rotation speed. Also in the region where the virtual engine rotation speed is equal to or lower than the idling control lower-limit rotation speed, the relationship between the virtual engine rotation speed and the virtual engine torque is specified. Thus, unlike the actual engine, the virtual engine realized by the engine model MOD11 is controllable in the entire engine rotation speed region equal to or higher than zero.

The control at the time of starting by the vehicle control device 101 in the second embodiment will be described using a time chart. As in the first embodiment, when the start condition is met, the vehicle control device 101 starts the battery electric vehicle 100 regardless of whether the driver has operated the clutch operation device 24.

In the second embodiment, however, clutch operation required at the time of starting in the MT vehicle is not reproduced. Instead, from the state where the electric motor 4 is stopped and the clutch 8 is engaged, the vehicle control device 101 rotates the electric motor 4 with the clutch 8 engaged to thereby start the battery electric vehicle 100. In other words, the vehicle control device 101 temporarily cancels the MT mode before and after starting of the battery electric vehicle 100. In an MT mode cancelation period in which the MT mode is temporarily canceled, the driver's operation of the clutch operation device 24 is disregarded and the start control of the battery electric vehicle 100 is performed based on a different logic from that in the MT mode.

### 5-3-2. Time Chart

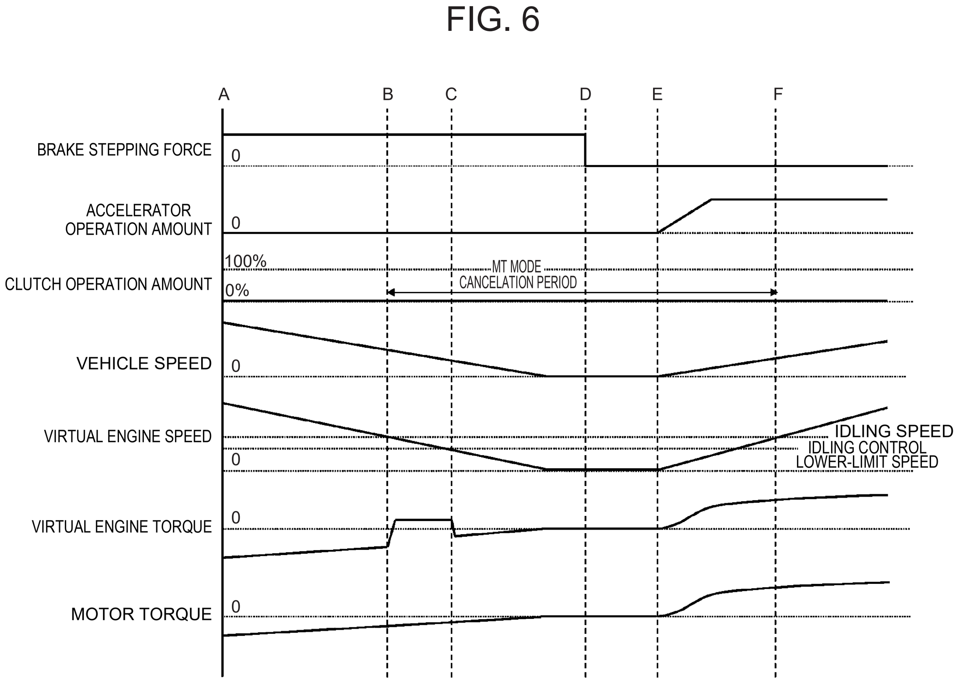

The control that the vehicle control device 101 performs in the second embodiment will be described using a time chart. FIG. 6 shows a time chart in the case where the start condition is that the accelerator is turned on by the driver and where the battery electric vehicle 100 is started in response to turning on of the accelerator.

At point A when the time chart starts, the driver is stepping on the brake pedal 23 and the brake is activated. As the brake is activated, the vehicle speed decreases gradually, and the virtual engine rotation speed decreases accordingly. Since the accelerator operation amount is 0%, the virtual engine torque is negative. A negative virtual engine torque is reproduced by the regenerative torque of the electric motor 4.

At point B, the virtual engine rotation speed falls below the idling rotation speed. Since the clutch 8 remains in the connected state, if the virtual engine rotation speed keeps decreasing, a state of an engine stall arises. Therefore, the vehicle control device 101 temporarily cancels the MT mode. During the MT mode cancelation period, the driver's operation of the clutch operation device 24 is not reflected on the control of the clutch 8, and the clutch 8 remains in the connected state.

At point B, the idling control is activated in response to the virtual engine rotation speed having fallen below the idling rotation speed. The idling control increases the virtual engine torque to maintain the idling rotation speed. However, since the accelerator operation amount is 0%, an upper limit is set on the virtual engine torque to avoid an increase in the drive force that is not intended by the driver.

However, the virtual engine torque that is increased by the idling control is not reflected on the torque of the electric motor 4. This is to prevent a rapid change in a deceleration rate due to a rapid change in the motor torque, and all this while the regenerative torque according to the vehicle speed is output from the electric motor 4.

As the vehicle speed decreases, the virtual engine rotation speed decreases and eventually falls below the idling control lower-limit rotation speed at point C. This state corresponds to a state of an engine stall in the conventional MT vehicle. When the virtual engine rotation speed falls below the idling control lower-limit rotation speed, the idling control ends. At this point, the vehicle control device 101 may make the display of the HMI 20 output a display indicating the state of an engine stall. However, to prevent the driver from feeling unpleasant sensations, the vehicle control device 101 gradually stops the battery electric vehicle 100 instead of suddenly stopping it.

At point D, the battery electric vehicle 100 stops completely. Then, at point E, the driver turns the accelerator on, i.e., steps on the accelerator pedal 22 and inputs an operation amount into the accelerator pedal 22. In response to the accelerator pedal 22 being operated, the vehicle control device 101 starts the battery electric vehicle 100.

At point D, a state where the virtual engine rotation speed has fallen below the idling control lower-limit rotation speed, i.e., a state corresponding to an engine stall is present, which, if in the conventional MT vehicle, would require the operation of re-starting the engine. However, such an operation is not required in the battery electric vehicle 100. When the driver steps on the accelerator pedal 22 and increases the accelerator operation amount, even when the virtual engine rotation speed is equal to or lower than the idling control lower-limit rotation speed, the virtual engine torque corresponding to the virtual engine rotation speed and the accelerator operation amount is output in accordance with the torque map (e.g., the torque map of FIG. 4) described in the preceding section. The region where the virtual engine rotation speed is equal to or lower than the idling control lower-limit rotation speed is a region where, if in the conventional MT vehicle, the engine torque would not be output. However, as the torque map illustrated in FIG. 4 or FIG. 5 is used, the virtual engine torque can be calculated also in such a region. During the MT mode cancelation period, the driver's operation of the clutch operation device 24 is disabled. Meanwhile, the operation amount of the clutch operation device 24 is not reflected on the calculation of the virtual engine torque, and the virtual engine torque is calculated from the accelerator operation amount.

From the electric motor 4, torque based on the virtual engine torque is output, causing the vehicle to start moving forward. The MT mode cancelation period ends, for example, at a point when the vehicle speed of the battery electric vehicle 100 has risen and reached a predetermined speed. Alternatively, the MT mode cancelation period may end at a point when the virtual engine rotation speed has exceeded the idling rotation speed. When the MT mode cancelation period ends, the control of the battery electric vehicle 100 in accordance with the control logic in the MT mode is resumed. In this way, the battery electric vehicle 100 can be started without the driver performing operation of the clutch operation device 24.

In the torque maps illustrated in FIG. 4 and FIG. 5, the torque in the region where the virtual engine rotation speed is equal to or lower than the idling control lower-limit rotation speed can be arbitrarily set. However, it is desirable that the torque be set so as to change continuously before and after the idling control lower-limit rotation speed is reached. It is also desirable that the torque be set so as to approach zero as the virtual engine rotation speed decreases, or to become constant. When the torque is set so as to approach zero, the torque increases according to an increase in the virtual engine rotation speed that is displayed on the display of the HMI 20 or represented by the pseudo-engine sound, so that an occupant of the battery electric vehicle 100 is less likely to experience a feeling of strangeness. Alternatively, when the torque is set so as to become constant or slightly approach zero, the torque is output also in an extremely-low-speed region of the vehicle speed of the battery electric vehicle 100, which allows the driver to start the vehicle more easily.

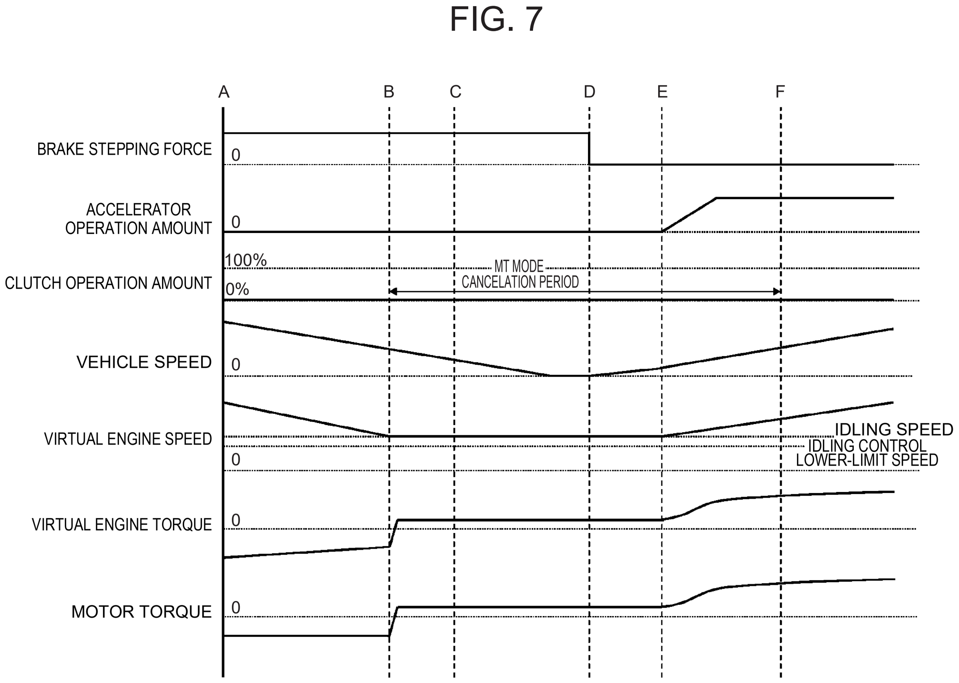

Subsequently, an example of the case of another start condition will be described using the time chart of FIG. 7. Here, the start condition is that the brake is canceled by the driver.

The actions from point A to point B are the same as in FIG. 6. As the driver steps on the brake pedal 23, the vehicle speed decreases. The virtual engine torque becomes negative and a regenerative torque is output from the electric motor 4.

At point B, when the virtual engine rotation speed becomes equal to or lower than the idling rotation speed, the MT mode is temporarily canceled. During the MT mode cancelation period, the driver's operation of the clutch operation device 24 is disabled, and the vehicle control device 101 controls the clutch 8 so as to remain in the engaged state.

In response to the virtual engine rotation speed having become equal to or lower the idling rotation speed, the virtual engine torque is increased to idling rotation speed maintaining torque for maintaining the idling rotation speed. Until the battery electric vehicle 100 starts again, the virtual engine torque is kept at the idling rotation speed maintaining torque, and the virtual engine rotation speed is kept at the idling rotation speed.

When the virtual engine rotation speed decreases to or below the idling rotation speed, the torque output from the electric motor 4 is switched to creep torque. The creep torque output here is torque that simulates torque generated by a creep phenomenon of an automatic transmission vehicle (hereinafter written as "AT vehicle"). Outputting the creep torque allows smoother starting.

Since the driver is stepping on the brake pedal 23, the battery electric vehicle 100 stops eventually. Thereafter, at point D, the driver takes his or her foot off the brake pedal 23 to cancel the brake. At this point, although the driver is not operating the accelerator pedal 22, since the torque corresponding to the creep torque is being output from the electric motor 4, the vehicle starts moving forward. In this way, the battery electric vehicle 100 is started as the start condition is met, regardless of whether the driver has operated the clutch operation device 24.

Thereafter, at point E, when the driver steps on the accelerator pedal 22, the virtual engine torque increases. Meanwhile, the driver's operation of the clutch operation device 24 is disabled. The virtual engine torque is calculated based on the accelerator operation amount, and the operation amount of the clutch operation device 24 is not reflected on the calculation of the virtual engine torque. The torque based on the virtual engine torque is output from the electric motor 4.

The MT mode cancelation period ends, for example, at a point when the vehicle speed reaches a predetermined speed. When the MT mode cancelation period ends, the driver's operation of the clutch operation device 24 is enabled again, and the battery electric vehicle 100 is controlled in accordance with the control logic in the MT mode.

The two embodiments relating to the actions at the time of starting have been described. Thus, in the battery electric vehicle 100 according to the embodiments, the clutch 8 is automatically controlled by the vehicle control device 101 so as to start the battery electric vehicle 100. If the behavior of the conventional MT vehicle is completely reproduced also at the time of starting, operation to be performed by the driver is large in number and complicated. Therefore, the driver, especially one who is not used to driving the MT vehicle, may find the operation troublesome. On the other hand, the battery electric vehicle 100 can be started even when the driver has not performed operation of the clutch operation device 24. This makes it easier for the driver to perform operation for starting, and can reduce the troublesomeness of the operation. During the automatic clutch control period or the MT mode cancelation period, input from the driver to the clutch operation device 24 is disabled. This can prevent an incident where behavior of the battery electric vehicle 100 that is not intended by the driver occurs due to erroneous operation etc.

As a modified example of the first embodiment, the automatic clutch control period may be canceled when the driver's operation of the clutch operation device 24 is detected while the vehicle is stopping. When the driver wants to perform the clutch operation by himself or herself, respecting that intention can provide the driver with the fun of starting the vehicle by his or her own operation. To prevent unintended cancelation due to erroneous operation, the automatic clutch control period may be canceled on the condition that predetermined operation is performed on the clutch operation device 24.

### 6. Determination on Connection or Disconnection of Clutch

The clutch 8 may be a dry clutch or may be a wet clutch. The disconnected state of the clutch 8 in the foregoing description refers to a state where the clutch capacity is equal to or lower than a predetermined value. That the clutch capacity is equal to or lower than the predetermined value can be determined based on the stroke of the release cylinder or the master cylinder being equal to or longer than a predetermined value. The stroke of the release cylinder can be determined by a signal from a release cylinder stroke sensor provided at the release cylinder. The stroke of the master cylinder can be determined from a signal from a master cylinder stroke sensor provided at the master cylinder. The engaged state of the clutch 8 refers to a state where the clutch capacity is equal to or higher than the predetermined value. That the clutch capacity is equal to or higher than the predetermined value can be determined based on the stroke of the release cylinder or the master cylinder being equal to or shorter than a predetermined value.

### 7. Modified Examples

The above description has been given based on the assumption that the amount that the clutch operation device 24 is operated by the driver is directly reflected on the clutch capacity of the clutch 8 and that the driver's operation of the shift position operation device 25 is directly reflected on the control of the transmission 9. However, the operation amount of the clutch operation device 24 and the shift position selected by the shift position operation device 25 need not necessarily correspond one-for-one to the clutch capacity of the clutch 8 and the gear stage selected in the transmission 9, respectively, and the behavior of the MT vehicle may be reproduced by an entire power train of the battery electric vehicle 100. That is, the virtual engine torque may be reproduced by a combination of all of the torque of the electric motor 4, the clutch capacity of the clutch 8, and the gear stage selected in the transmission 9.

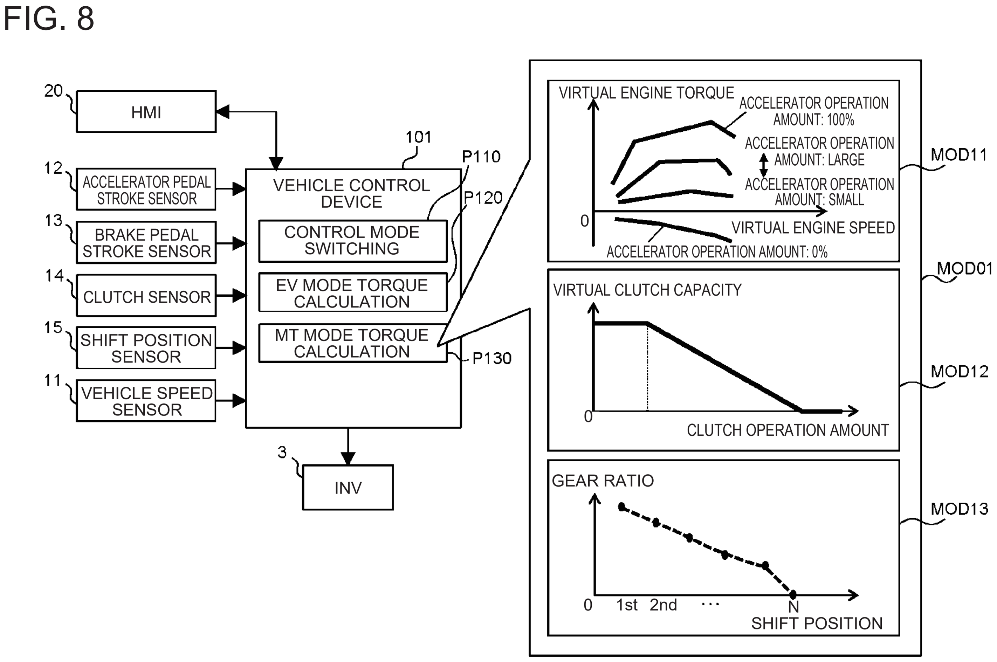

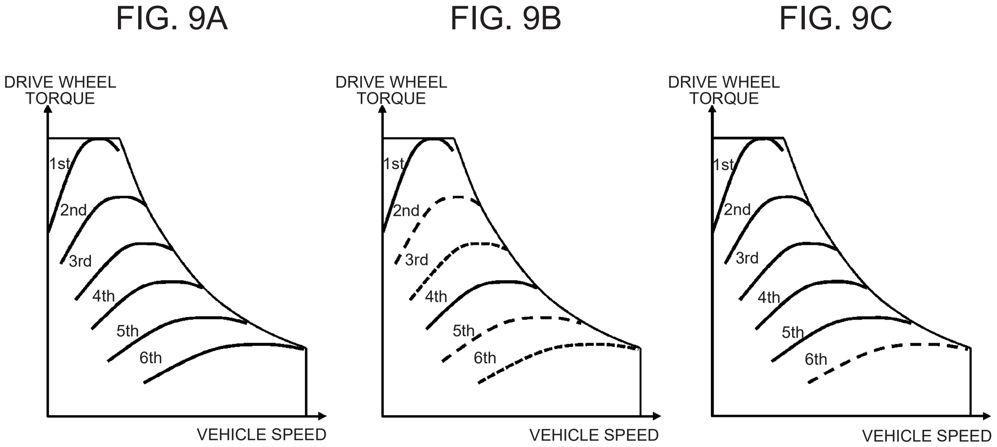

A configuration of a travel control device in a modified example will be described using FIG. 8, FIG. 9A, FIG. 9B, and FIG. 9C.

FIG. 8 is a view for describing the configuration of the travel control device in the modified example. Of processes that the vehicle control device 101 as the travel control device performs, the process P110 and the process P120 are the same as in FIG. 2.

When the control mode is switched to the MT mode, the vehicle control device 101 executes the process P130 for the torque calculation in the MT mode. As in FIG. 2, the vehicle model MOD01 is used for the torque calculation in the MT mode. However, the vehicle model MOD01 includes, in addition to the engine model MOD11, a clutch model MOD12 and a transmission model MOD13. A clutch that is virtually realized by the vehicle model MOD01 will be referred to as a virtual clutch, and a transmission that is virtually realized by the vehicle model MOD01 will be referred to as a virtual transmission. In the clutch model MOD12, the virtual clutch is modeled. In the transmission model MOD13, the virtual transmission is modeled.

The virtual engine rotation speed in the engine model MOD11 is calculated from the vehicle speed, the total speed reduction ratio, and a slip ratio of the virtual clutch. Further, the virtual engine torque is calculated from the virtual engine rotation speed and the accelerator operation amount. The total speed reduction ratio is a numerical value that is obtained by multiplying the gear ratio of the virtual transmission by a speed reduction ratio that is determined by a mechanical structure from the virtual transmission to the drive wheels.

The clutch model MOD12 calculates the torque capacity of the virtual clutch (virtual clutch capacity). In the clutch model MOD12, the virtual clutch capacity is given relative to the clutch operation amount acquired from the signal of the clutch sensor 14. Based on a comparison between the virtual clutch capacity and the virtual engine torque calculated by the engine model MOD11, a virtual clutch torque input from the virtual clutch into the virtual transmission is calculated. In the clutch model MOD12, a value obtained by subtracting torque transmission gain, obtained by dividing the virtual clutch capacity by its maximum value, from 1 is calculated as the slip ratio. The slip ratio is used for the calculation of the virtual engine rotation speed in the engine model MOD11.

The transmission model MOD13 calculates a virtual gear ratio. The virtual gear ratio is a gear ratio that is determined by the virtual shift position in the virtual transmission. The virtual gear ratio is set for each shift position. A maximal virtual gear ratio is set for first gear, and the virtual gear ratio is reduced in the order of second gear, third gear, fourth gear, and so on. The virtual shift positions correspond one-for-one to signals of the shift position sensor 15.

The transmission model MOD13 calculates the virtual transmission torque using the virtual gear ratio and the virtual clutch torque. The virtual transmission torque is a virtual torque that is output from the virtual transmission. The vehicle control device 101 controls the clutch 8, the transmission 9, and the output torque of the electric motor 4 such that the drive wheel torque becomes torque corresponding to the virtual transmission torque.

In the modified example, the gear stages of the transmission 9 need not necessarily match the number of shift positions that can be selected in the shift position operation device 25. The gear stages of the transmission 9 may be the two stages of a high-speed gear and a low-speed gear, or may be three or more stages. FIG. 9A, FIG. 9B, and FIG. 9C show correspondence relationships between the virtual gear stages of the virtual transmission and the gear stages of the transmission 9. While this is not shown, a map defining the relationship between the motor speed and the motor torque for each virtual shift position is prepared for each request value of the drive wheel torque and each gear stage. The vehicle control device 101 selects a map according to the request value of the drive wheel torque and the gear stage of the transmission 9, and determines the motor torque based on the virtual shift position and the motor speed in accordance with the selected map.

FIG. 9A is an example of a case where the gear stages of the transmission 9 are six stages and match the number of gear stages of the virtual transmission. Each virtual shift position is associated with corresponding one of the gear stages, and when the virtual shift position is switched, the vehicle control device 101 switches the gear stage of the transmission 9 accordingly. The motor torque in each gear stage is determined based on the motor speed in accordance with the aforementioned map.

FIG. 9B is an example of a case where the gear stages of the transmission 9 are the two stages of a high-speed gear and a low-speed gear. Of the virtual shift positions from the first gear to the sixth gear, the first gear to the third gear are associated with the low-speed gear and the fourth gear to the sixth gear are associated with the high-speed gear. That is, switching of the shift position on the low-speed side and the high-speed side is reproduced by switching of the gear stage of the actual transmission 9, while switching of the shift position from the first gear to the third gear and from the fourth gear to the sixth gear is virtually reproduced by the electric motor torque.

FIG. 9C is an example of a case where the gear stages of the transmission 9 are five stages. Of the virtual shift positions from the first gear to the sixth gear, the first gear to the fifth gear are associated with the respective gear stages. The virtual shift position of the sixth gear is associated with the gear stage of the fifth gear of the transmission 9 and virtually reproduced by the torque of the electric motor 4.

Also in the modified example, the start control is performed in the same manner as in the first or second embodiment. The vehicle control device 101 starts the battery electric vehicle 100 when the start condition is met, regardless of whether the driver has operated the clutch operation device 24. Since there is no need for the driver to operate the clutch operation device 24 at the time of starting, the ease of starting can be secured while the travel feeling of the MT vehicle is enjoyed.

## Claims

1. A battery electric vehicle (100) controlled in control modes including a manual mode in which an electric motor (4) is controlled so as to simulate an action of a virtual vehicle equipped with a virtual engine, the battery electric vehicle comprising:
a transmission (9) configured to change a gear ratio between the electric motor (4) and a drive wheel (6F, 6R);
a clutch (8) provided between the electric motor (4) and the transmission (9);
a clutch operation device (24); and
a control device (101) including a processor (102) configured to:
communicate with the clutch (8) and the clutch operation device (24);
in the manual mode, control the clutch (8) according to a command from the clutch operation device (24); and
even in the manual mode, at a time of starting of the battery electric vehicle (100), start the battery electric vehicle (100) by controlling the clutch (8) without depending on the command from the clutch operation device (24).

2. The battery electric vehicle (100) according to claim 1, wherein the processor (102) is configured to, when a start condition of the battery electric vehicle (100) is met, start the battery electric vehicle (100) by controlling the clutch (8) without depending on the command from the clutch operation device (24).

3. The battery electric vehicle (100) according to claim 2, wherein the processor (102) is configured to, when the start condition is met, from a state where the electric motor (4) is stopped and the clutch (8) is engaged, rotate the electric motor (4) with the clutch (8) in an engaged state.

4. The battery electric vehicle (100) according to claim 2, wherein the processor (102) is configured to, when the start condition is met, rotate the electric motor (4) at a predetermined rotation speed with the clutch (8) in a disconnected state, and engage the clutch (8) while controlling torque of the electric motor (4).

5. The battery electric vehicle (100) according to any one of claims 1 to 4, wherein:
the control device (101) includes a storage device (103) that stores a torque map for simulating a torque property of the virtual engine by torque of the electric motor (4); and
the torque map is such that:
in a region where a virtual engine rotation speed of the virtual engine is equal to or higher than a predetermined speed, the torque property of the virtual engine is reproduced; and
in a region where the virtual engine rotation speed is equal to or lower than the predetermined speed, the torque property is different from the torque property of the virtual engine.

6. The battery electric vehicle (100) according to claim 5, wherein the torque map is a map representing a relationship between the virtual engine rotation speed and the torque of the electric motor (4), and in the region where the virtual engine rotation speed is equal to or lower than the predetermined speed, the torque of the electric motor (4) is set so as to approach zero as the virtual engine rotation speed decreases.

7. The battery electric vehicle (100) according to claim 5, wherein the torque map is a map representing a relationship between the virtual engine rotation speed and the torque of the electric motor (4), and in the region where the virtual engine rotation speed is equal to or lower than the predetermined speed, the torque of the electric motor (4) is set to be constant.

8. The battery electric vehicle (100) according to claim 5, wherein the torque map is a map representing a relationship between the virtual engine rotation speed and the torque of the electric motor (4), and the torque of the electric motor (4) in the region where the virtual engine rotation speed is equal to or lower than the predetermined speed is variable according to travel resistance of the battery electric vehicle (100).

9. The battery electric vehicle (100) according to any one of claims 2 to 8, further comprising a brake operation device (23), wherein the start condition is that an amount that the brake operation device (23) is operated by a driver of the battery electric vehicle (100) becomes equal to or smaller than a first threshold value.

10. The battery electric vehicle (100) according to any one of claims 2 to 8, further comprising an accelerator operation device (22), wherein the start condition is that an amount that the accelerator operation device (22) is operated by a driver of the battery electric vehicle (100) becomes equal to or larger than a second threshold value.

11. The battery electric vehicle (100) according to any one of claims 2 to 8, wherein the processor (102) is configured to disable an input to the clutch operation device (24) at the time of starting of the battery electric vehicle (100).
